# EUROPEAN PATENT SPECIFICATION

(11) **EP 2 930 146 B1**
(45) Date of publication and mention of the grant of the patent: **09.10.2019**
(21) Application number: 13861232.0
(22) Date of filing: 27.08.2013
(51) Int. Cl.: H01M 4/36, H01M 4/38, H01M 4/485, C01B 33/02, C01D 15/02, H01M 10/052, H01M 4/13, H01M 4/62

(54) **SURFACE-MODIFIED SILICON NANOPARTICLES FOR NEGATIVE ELECTRODE ACTIVE MATERIAL, AND METHOD FOR MANUFACTURING SAME**
OBERFLÄCHENMODIFIZIERTE SILICIUMNANOPARTIKEL FÜR EIN NEGATIVELEKTRODEN-AKTIVMATERIAL UND VERFAHREN ZUR HERSTELLUNG DAVON
NANOPARTICULES DE SILICIUM À SURFACE MODIFIÉE POUR MATÉRIAU ACTIF D'ÉLECTRODE NÉGATIVE ET PROCÉDÉ DE FABRICATION ASSOCIÉ

(30) Priority: 05.12.2012 KR 20120140432
(43) Date of publication of application: 14.10.2015
(73) Proprietor: Samsung Electronics Co., Ltd., Gyeonggi-do 16677 (KR)
(72) Inventor: CHANG, Dong Gyu, Daejeon 301-131 (KR); LEE, Ju Myeung, Cheongju-si Chungcheongbuk-do 361-300 (KR); SHIM, Kyu Eun, Daejeon 301-837 (KR); YANG, Woo Young, Daejeon 302-747 (KR)
(74) Representative: Elkington and Fife LLP
(86) International application number: PCT/KR2013/007687
(87) International publication number: WO 2014/088187

(56) References cited:
- EP-A1- 2 372 816
- WO-A1-2013/002157
- WO-A2-2005/065082
- KR-A- 20110 124 728
- KR-A- 20110 134 793
- KR-A- 20120 087 000
- US-A1- 2006 147 797
- US-A1- 2007 190 413
- US-A1- 2007 224 508
- US-A1- 2010 143 804
- US-A1- 2012 003 535

## Description

### [Technical Field]

The present invention relates to a negative active material including silicon nanoparticles for a lithium secondary cell and a lithium secondary cell including the same, and more particularly, to a method of manufacturing silicon nanoparticles which improves cell characteristics by reforming surfaces of silicon particles having a diameter in a range of 5 to 500 nm to surfaces of lithium and carbon sources, , and silicon nanoparticles manufactured by the method.

### [Background Art]

Electronic, information communication industries show rapid improvements through a portable, small sized, lightweight electronic device having a high performance, and requirements of a lithium secondary cell configured to embody high capacity and high efficiency as a power source of the electronic device is rapidly increased. A lithium secondary cell which is used by repetitive charging/discharging through insertion, separation of lithium ions is established as a necessary power source of a middle/large sized device such as an electronic automobile as well as a portable electronic device for information communication. The lithium secondary cell is preferably used as a unit cell of a middle/large sized cell module including a plurality of cells as well as an electronic cell used as a power source of a small sized device such as a cell phone. An applicable middle/large sized device includes a power tool; an electronic vehicle including an electronic vehicle (EV), a hybrid electric vehicle (HEV), and a plug-in hybrid electric vehicle (PHEV); an electric bicycle including an ebike, an e-scooter; an electric golf cart; an electric truck; an electric commercial vehicle; a system for storing electricity, and/or the like. For the efficiency of the above products, development of a lithium secondary cell capable of being a small size and light weight and ensuring a high capacity, a high energy concentration, a stability, and lifetime characteristics is necessary.

The improvement of the efficiency of the lithium secondary cell is based on the development of structural elements of an anode, a cathode, a separation layer, and an electrolyte, and the anode among them is focused on in development of an anode material of improving capacity. A lithium metal is used as a negative active material in the conventional lithium secondary cell, but the lithium metal has a risk of explosion caused by shorting of a cell by formation of a dendrite, and thus, recently, a carbon based negative active material instead of the lithium metal has been widely used. The carbon based negative active material includes a crystalline carbon such as graphite or artificial graphite, or an amorphous carbon such as a soft carbon or hard carbon, and in particular, the graphite among the crystalline carbon is representatively used. However, the carbon based negative active material such as graphite is limited in application to a high capacity lithium secondary cell.

In order to solve the above problems, recently, a metal based negative active material has been actively studied. For example, a lithium secondary cell has been utilizing a metal or semimetal such as silicon (Si), tin (Sn), aluminum (Al), germanium (Ge), lead (Pb), zinc (Zn), and/or the like as the negative active material. The above materials may charge or discharge lithium ions more than the carbon based negative active material, and thus, are suitable for manufacturing a cell having high capacity and high energy concentration.

Silicon (Si) has poorer cyclic characteristics than the carbon based negative active material, and thus, it is difficult for commercialization. The reason for this is when silicon is used as a charging or discharging material of the lithium ions, a volume thereof is changed during charging or discharging, and thus, electrical contact characteristics between active materials are degraded or the active material is delaminated from a charge collector. That is, a volume of the silicon included in the negative active material is expanded to 300 % or more, and a crack is generated inside and on a surface of the electrode by a mechanical stress generated during the expansion. Also, when the lithium ions are discharged by a discharge, the volume of the silicon is shrunk, and when the above charge/discharge cycle is repeated, the active material is separated from the charge collector and an electrical insulation is generated by a space formed between the silicon particles and the active material, thereby greatly decreasing lifetime of the cell.

In order to solve the above problem, decreasing a size of the silicon particle has been tried. However, silicon can easily become nanoparticles through a grinding process, but a surface thereof is easily oxidized during the formation of the silicon nanoparticles, and thus, cell characteristics are degraded by a decrease of capacity and generation of an oxide film. The problem caused by the surface oxidization, in particular, becomes a bigger problem as the size of the particle is decreased to a nano scale and a ratio of a film volume with respect to a metal volume is increased. Also, the oxide film becomes a reason of depleting electrolytes by repeating a reaction between the oxide film and the electrolyte to be dissolved and formation of the oxide film on the surface. In order to suppress the surface oxidization, there are problems in that process costs are increased by a solvent, a non-active environment, etc., and difficult treatment because a volume per a unit weight of the nanoparticles themselves is increased.

EP 2 372 816 A1 discloses a method for manufacturing a negative electrode material for a secondary battery with a non-aqueous electrolyte by coating a surface of powder with carbon at a coating amount of 1 to 40 mass % with respect to an amount of the powder by heat CVD treatment under an organic gas and/or vapor atmosphere at a temperature between 800° C and 1300° C, the powder being composed of at least one of silicon oxide represented by a general formula of SiOₓ (x=0.5 to 1.6) and a silicon-silicon oxide composite having a structure that silicon particles having a size of 50 nm or less are dispersed to silicon oxide in an atomic order and/or a crystallite state, the silicon-silicon oxide composite having a Si/O molar ratio of 1/0.5 to 1/1.6; blending lithium hydride and/or lithium aluminum hydride with the powder coated with carbon; and thereafter heating the powder coated with carbon at a temperature between 200° C and 800° C to be doped with lithium at a doping amount of 0.1 to 20 mass % with respect to an amount of the powder.

US 2010/143804 discloses an anode active material including a material alloyable with lithium coated with an oxide including lithium or coated with a complex of an oxide including lithium and an electrically conductive material.

### [Disclosure]

### [Technical Problem]

The present invention is directed to prevent oxidization of silicon nanoparticles which are a negative active material for a lithium secondary cell and degradation of cell characteristics caused by generation of an oxide film. In order to achieve the above, silicon nanoparticles including a protective oxide film configured to suppress oxidization on a silicon surface and a method thereof are provided. Also, in the present invention, in order to use the silicon nanoparticles as an anode material of the lithium secondary cell, a mixture ratio of silicon to carbon by increasing an amount of a carbon source during manufacturing secondary particles is controlled, and thus, an anode material at an amount which is easily adjustable is provided.

### [Technical Solution]

One aspect of the present invention provides a silicon nanoparticle whose surface includes an oxide film of LiₓSi_{y}O_{z} [where, x>0, y>0, 0<z≤2(x+4y)] and a carbon (C) coating layer formed on the oxide film.

Another aspect of the present invention provides a method of manufacturing silicon nanoparticles comprising an oxide film of LiₓSi_{y}O_{z} [where x>0, y>0, 0<z≤2(x+4y)] disposed on a surface of the silicon nanoparticle and a carbon (C) layer formed on the oxide film, the method comprising:injecting a lithium (Li) source and a carbon (C) source into silicon nanoparticles and mixing therewith, followed by heat-treating the mixture at a temperature in a range of 700 to 1,200 °C; where the mixing is performed by wet grinding or dry grinding.

Preferably, the method may further include additionally injecting a carbon source into the silicon nanoparticles and mixing therewith, and heat-treating at a temperature in a range of 900 to 1,200 °C.

Preferably, a diameter of the silicon nanoparticles is in a range of 5 to 500 nm.

Preferably, the lithium source includes Li₂CO₃ or LiOH.

Preferably, the carbon source includes at least one type selected from the group consisting of graphite, pitch, urea, and sucrose.

Still another aspect of the present invention provides an anode for a lithium secondary cell including the above silicon nanoparticles.

Yet another aspect of the present invention provides a lithium secondary cell including the above silicon nanoparticles as a negative active material.

### [Advantageous Effects]

According to the present invention, during a process of manufacturing silicon nanoparticles used for an anode material of a lithium secondary cell, surfaces of the nanoparticles are reformed by a lithium source and a carbon source, thereby preventing surface oxidization of the nanoparticles. Since the silicon nanoparticles without the oxidization are used as the anode material, degradation of characteristics of the lithium secondary cell, which are caused by decreasing capacity and depleting electrolytes by an oxide film, can be prevented. Also, in order to be used as the anode material, a carbon source is additionally mixed with the silicon nanoparticles, and thus, a ratio of the silicon to carbon can be adjusted, thereby easily adjusting an amount of the lithium secondary cell.

### [Description of Drawings]

FIG. 1 is a cross-sectional view illustrating a silicon nanoparticle according to an embodiment of the present invention.
FIG. 2 is a cross-sectional view illustrating secondary particles.
FIG. 3 is a TEM analysis result of silicon nanoparticles manufactured by Example 1.
FIG. 4 is a SEM analysis result of secondary particles of the silicon nanoparticles manufactured by embodiment 1.
FIG. 5 is a SEM analysis result of secondary particles of the silicon nanoparticles manufactured by Example 2.

### [Best Mode of the Invention]

In the present invention, in order to prevent easily oxidizing a particle surface during a process of manufacturing silicon nanoparticles, silicon nanoparticles manufactured by injecting and mixing a lithium source and a carbon source during or after the manufacturing of particles, a method of reforming surfaces of silicon particles, and a lithium secondary cell manufactured by the same are provided.

A silicon nanoparticle according to an embodiment of the present invention includes an oxide film of LiₓSi_{y}O_{z} [where, x>0, y>0, 0<z≤2(x+4y)] and a carbon (C) coating layer on a surface of a silicon metal in a spherical shape. The oxide film of LiₓSi_{y}O_{z} is in a form of an oxide formed on a silicon metal by a lithium source, and a ratio of x, y, and z may be selected in a wide range according to a ratio of the lithium source to the silicon, and a reaction condition. That is, the oxide film of LiₓSi_{y}O_{z} may be formed or exist in a form of a composite oxide formed on the silicon by lithium. Also, the oxide film of LiₓSi_{y}O_{z} may be formed when silicon is mixed with lithium source and heat-treated at any time during or after the manufacturing of the silicon nanoparticles. Although silicon oxide is formed before lithium source is injected, when the silicon is mixed with the lithium source and heat-treated, the mixture is changed into the oxide film of LixSiyOz. Also, although the lithium source is injected, the oxide film, which is formed on the silicon (Si), firstly reacts with oxygen (O) in an air may be previously formed.

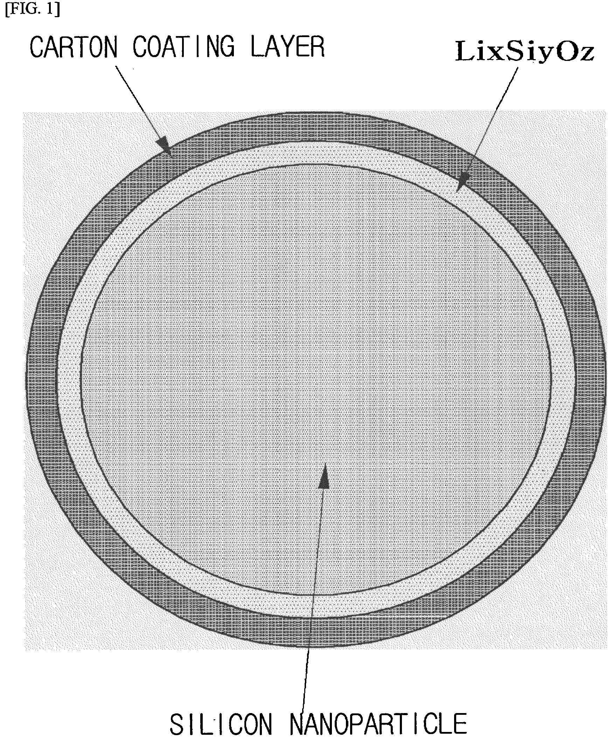

Then, the carbon source may be injected simultaneously with or injected at a time different from the lithium source, and in any case, since the carbon source has a low reactivity with silicon (Si) or lithium (Li), the carbon is extruded toward a surface of the particle during the heat-treatment, and thus, becomes an outermost coating layer of the particle surface as shown in FIG. 1. Thus, the silicon nanoparticles of the embodiment of the present invention include a surface reformed in a form including the oxide film of LiₓSi_{y}O_{z} and a carbon coating layer formed on the oxide film of LiₓSi_{y}O_{z}. The surface reformed silicon nanoparticles are not oxidized anymore, and thus, when the surface reformed nanoparticles are used as an anode material, thereby a problem of degradation of cell characteristics by oxidization is solved. Also, the carbon coating layer coated on the surface increases conductivity.

The silicon particles included in the negative active material for the lithium secondary cell according to the embodiment of the present invention have diameters in a range of 5 to 500 nm. When the diameter of the silicon particles is less than 5 nm, cohesion may be generated between the silicon particles and thus the silicon particles may not uniformly distributed in the active material, and when the diameter of the silicon particles is more than 500 nm, a volume change during charging/discharging is greatly increased and thus electrical contact characteristics may be degraded or the active material may be delaminated from a charge collector. When manufacturing and treatment processes of the silicon particles and cell characteristics are considered, the diameter may preferably be in a range of 40 to 150 nm.

The silicon nanoparticles may be grinded by a mechanical processing method such as bead milling or ball milling, and in this case, the silicon metal is grinded to a proper level, and then, the lithium source and the carbon source are additionally mixed and grinded. The grinding : uses a wet grinding method or a dry grinding method. During the grinding process, the grinded silicon metal is exposed to an air during drying in the wet grinding or gathering in the dry grinding, and thus, an oxide layer is formed in a form of SiO2-α (α≥0) on a surface of silicon (Si). When the exposure to the air is performed without especially and artificially blocking contact with an oxidation environment, and then, the grinded silicon metal reacts with the oxygen in the air, thereby naturally generating the oxide layer. Then, the oxidized silicon metal is heat-treated at a temperature in a range of 700 to 1,200 °C, and the lithium source reacts with the silicon oxide of SiO2-α (α≥0) on the silicon surface to form the LixSiyOz, thereby forming a composite having the carbon coating layer on the surface thereof. A temperature of carbonifying the carbon source is sufficient in the above temperature range, but when is performed at a temperature of about 3,000 °C, the carbon source is graphitized, and thus, improved characteristics may be obtained. However, since dissolution and generation of a secondary phase are caused at a high temperature of 1,200 °C or more, the temperature may be determined by how the composite phase is adjusted.

Here, the heat-treatment atmosphere may be preferably controlled so as to embody improved characteristics based on the used carbon source. For example, when a carbon source such as pitch is used, after a heat-treatment is performed with flowing oxygen until a temperature of 200 °C so as to decrease a concentration of uncarbonized impurities after the heat-treatment, a reduction atmosphere is maintained at a temperature of 200 °C or more. Here, the silicon nanoparticles manufactured through a process of directly manufacturing the silicon nanoparticles without the grinding process including plasma, etc., are mixed with the lithium source and the carbon source through an additional process, and are exposed through the air during or after the mixing process, and thus, a silicon oxide film is formed on surfaces of the silicon nanoparticles as an SiO₂₋ₐ (α≥0) shape. Then, the silicon nanoparticles having the reformed surface may be manufactured through the same heat-treatment process as the above.

Li₂CO₃ or LiOH may be used as the lithium source, but any compound capable of supplying lithium to the surface of the silicon particles to form the oxide film of LiₓSi_{y}O_{z} may be limitlessly used. Also, graphite (natural, artificial, and/or the like), pitch, urea, or sucrose may be preferably used as the carbon source, however, in this case, anything which is capable of supplying carbon to the surface of the silicon nanoparticles to form the carbon coating layer may be limitlessly used. However, the carbon source is not necessarily added during the process of manufacturing the silicon nanoparticles, but may be added in a process of manufacturing subsequent secondary particles.

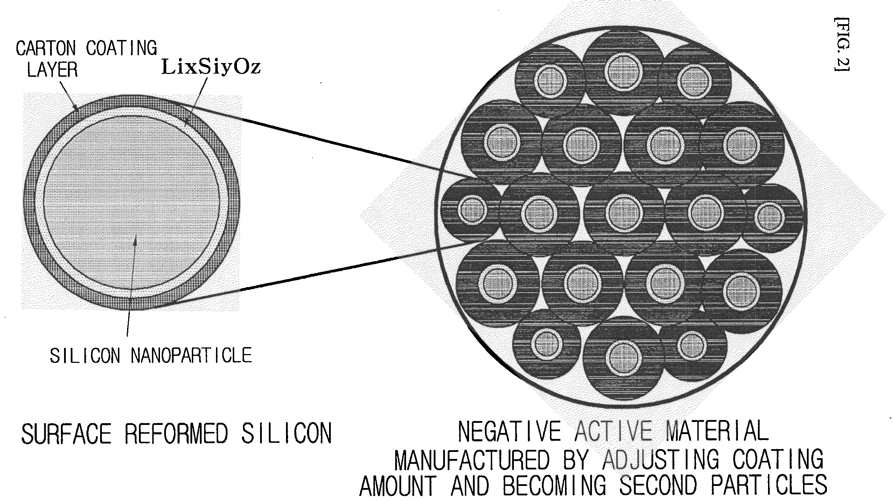

Then, since the silicon nanoparticles have too large of a specific surface area and are not used to be alone, the silicon nanoparticles may be generally manufactured as a conglomerate of secondary particles or may be manufactured to be easily used as an active material through various composite processes. In the process of manufacturing the secondary particles, since an amount of carbon increases by mixing with the carbon source according to the present invention, various shaped composites having an increased carbon (C) ratio in the active material are finally manufactured as shown in FIG. 2. Thus, the embodiment of the present invention provides a method of manufacturing the negative active material for the lithium secondary cell, which is characterized in that the carbon source is additionally injected into the silicon nanoparticles and mixed therewith, and then, heat-treated, and thus, the secondary particles with a conglomerating form of the silicon nanoparticles are manufactured.

In the above mixing process, a content of the carbon source is freely added with respect to the silicon nanoparticles, and thus, a ratio of the silicon (Si) to the carbon (C) may be adjusted. Here, an injected entire carbon source to be preferably added may be a carbon concentration among the negative active material at less than 99 wt%. The above range means the carbon content existing in the active material which is finally obtained after the heat-treatment. A weight of carbon which remains in the final active material is different based on the carbon source, and thus, an added amount of the carbon source may be adjusted by the above.

In the process of manufacturing the secondary particles after the carbon source is added, for example, a method of spray-drying after a wet mixture or a method of drying a slurry obtained from a wet mixture and crushing at a proper size may be used. Also, in a dry mixing, a method of manufacturing the slurry in a shape such as a pellet, and then, grinding to a proper size may be used. Also, the particles obtained by the above process are heat-treated at a temperature in a range of 900 to 1,200 °C, and then, the manufacturing of the secondary particles which may be used for the negative active material for the lithium secondary cell is finally completed. Here, the heat-treatment environment (atmosphere) may be preferably controlled as the oxygen atmosphere or the reduction atmosphere so as to embody improved characteristics based on the additionally added carbon source as mentioned above.

According to another aspect of the present invention, an anode for a lithium secondary cell, which includes the above silicon nanoparticles or the secondary particles thereof as the negative active material, and a lithium secondary cell including the same are provided. The anode includes a conductive material configured to increase conductivity such as the silicon nanoparticles and/or the like and a binder. A method of manufacturing the anode of the embodiment of the present invention is not limited, and any method known to those of ordinary skill in the art may be used. In the embodiment of the present invention, the anode of the present invention may be manufactured by mixing the negative active material, the conductive material, the binder, and a solvent to manufacture a slurry, and then, coating it on an anode charge collector including copper and drying it, and a filler may be added into the mixture if necessary.

Hereinafter, the present invention will be explained in detail with reference to examples. However, the examples are explained to help understanding the present invention, and the scope of the present invention is not limited by the examples.

### Example 1

### Manufacturing the silicon nanoparticles

500 ml of a pure water and 25 g of silicon dust which was a byproduct after manufacturing polysilicon in MEMC Company were inserted into an external 1,200ml distribution container, and dispersed slurry was formed, and then, the slurry was rotated and grinded in a bead mill having an inner volume of 150 ml using beads having a size of 0.03 mm at a condition of a peripheral speed of 11 m/s for 2 hours. 1g of LiOH and 2g of urea (Sigma-Aldrich Company, U7129) were added into the grinded slurry and further grinded. The further grinded slurry was sprayed and dried using a nozzle while maintaining a condition of a chamber having an inner temperature of 250 °C, and a back filter temperature of 120 °C in a 005R model of Dongjin Technology Institute Company. The obtained powder was heat-treated while maintaining a condition at a temperature of 800 °C for two hours, and thus, surface reformed nanoparticles were obtained.

### Manufacturing Secondary Particles

20g of the silicon nanoparticles obtained by the above method, 2g of pitch (JFE Company, MCP-350C), and 20g of graphite (Morgan SKG-1) were mixed and the mixed powder was heat-treated by flowing oxygen until 200 °C, and then, heat-treated while maintaining a temperature of 1,000 °C under a nitrogen atmosphere for two hours, thereby manufacturing the secondary particles.

### Example 2

Silicon nanoparticles were manufactured the same as in the method of manufacturing the silicon nanoparticles in Example 1 except 1 g of sucrose (Sigma-Aldrich Company, S9378) was used instead of urea, and dried in an oven at a temperature of 120 °C for 24 hours instead of sprayed and dried, and secondary particles were manufactured by the same method as Example 1 from the above obtained silicon nanoparticles.

### Evaluation

### 1) Analysis of Particle Characteristics

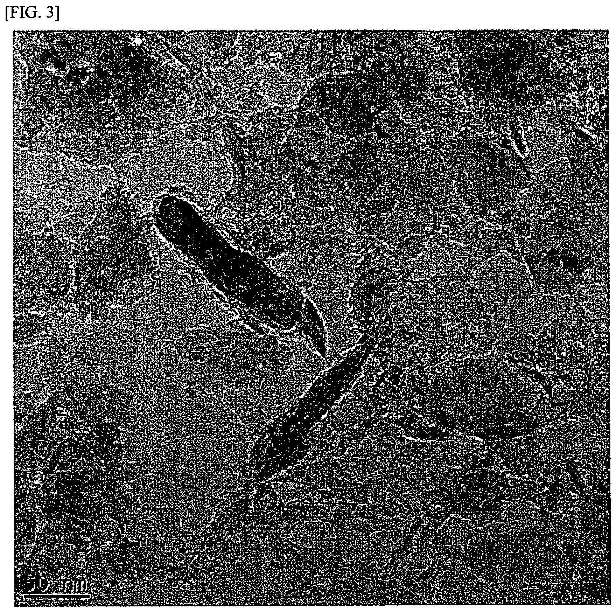

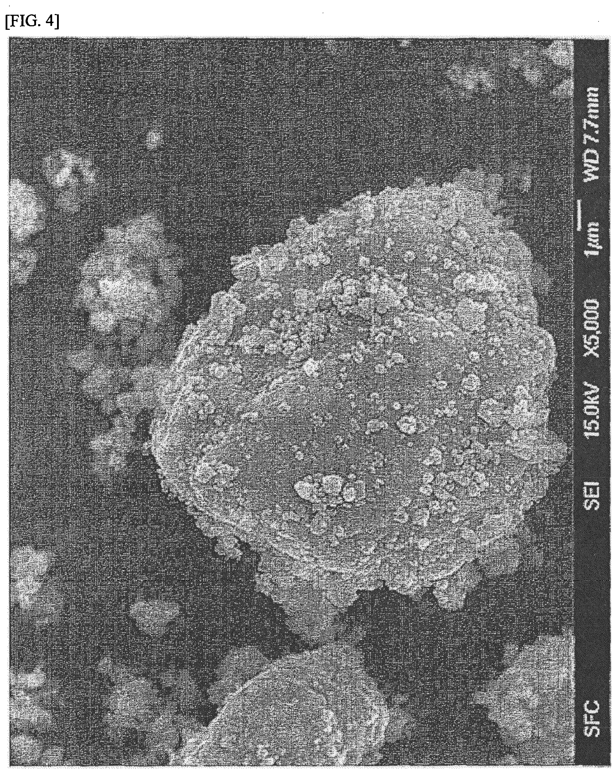

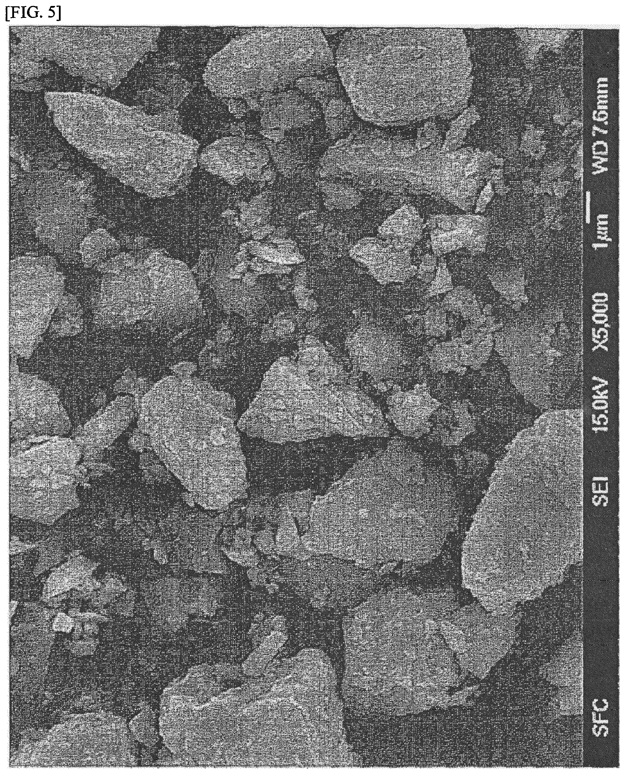

TEM and SEM analysis results of the silicon nanoparticles and the secondary particles manufactured in Examples 1 and 2 are illustrated in FIGS. 3, 4, and 5. Referring to FIG. 3, it was verified that a diameter of a silicon nanoparticle was 100 nm, and a composite layer of silicon and lithium and a carbon coating layer were formed on a surface of each secondary particle. Referring to FIGS. 4 and 5, it was verified that the silicon nanoparticles and the graphite were well composited and the secondary particles were formed.

### 2) Analysis of Cell Characteristics

The silicon nanoparticles manufactured in Example 1, graphite (Morgan Company, SKG-1), a conductive material (super p black, SPB), and a binder (polyvinylidene fluoride, PVDF) were prepared at a weight ratio of 40 : 40 : 10 : 10. After the binder is dissolved in a solvent NMP (N-methylpyrrolidone, 99 %, Aldrich Co.) using a mixer (a mini mill) for ten minutes, the secondary particles and the conductive material were injected and stirred, thereby manufacturing a slurry. After the manufactured slurry was coated on a copper foil using a blade, the solvent was dried at a temperature of 110 °C for two hours in an oven, and then, pressed using a roll press. The manufactured anode was dried at a temperature of 120 °C in a vacuum oven for 12 hours. A lithium metal foil was used for a cathode. The dried anode cut to a diameter of 1.4 cm, the manufactured cathode, and an electrolyte solution in which 1M LiPF6 was dissolved in ethylene carbonate (EC)/ethyl methyl carbonate (EMC)(v/v = 1/1) and vinylene carbonate (VC, 2 wt%) were used to form a 3216 type coin cell.

Also, the secondary particles manufactured in Examples 1 and 2 were used to manufacture a lithium secondary cell in the same method except secondary particles, the conductive material (super p black, SPB), and the binder (polyvinylidene fluoride, PVDF) were mixed at a weight ratio of 80 : 10 : 10.

### Comparative Example

An anode, a cathode, and a lithium secondary cell were manufactured except commercial silicon powder (633097, 98 %, Aldrich Corporation) having a diameter of tens of *µ*m was used.

The manufactured lithium secondary cell was left for 24 hours so as to stabilize the cell, and then, charging/discharging experiment was conducted using a charging/discharging device TOSCAT-3100 manufactured by the Toyo System Corporation. The charging/discharging was conducted at a current of 0.24 mA (1C/20) and a voltage in a range of 0.2 to 1.5 V. Variation of characteristics of the lithium secondary cell is displayed in Table 1. In Table 1, it was determined that the examples had a relatively smaller first discharging capacity, and a greatly higher efficiency than the comparative example, and in a tenth discharging capacity, had a capacity and efficiency greatly higher than the comparative example, and thus, capacity and lifetime characteristics are more excellent.

**Table 1**

| Negative active material | First discharging capacity (mAh/g) | First efficiency (discharging capacity/charging capacity) | Tenth discharging capacity (mAh/g) | Tenth efficiency (discharging capacity/charging capacity) |
|---|---|---|---|---|
| Example 1 the silicon nanoparticles | 1623.4 | 89.6 | 1549.1 | 97.8 |
| Example 1 Secondary particles | 1704.0 | 93.1 | 1620.0 | 99.4 |
| Example 2 Secondary particles | 1697.4 | 91.2 | 1609.1 | 99.3 |
| Comparative Example | 2640.8 | 65.4 | 852.6 | 44.6 |

## Claims

1. A silicon nanoparticle comprising an oxide film of LiₓSi_{y}O_{z} where x>0, y>0, 0<z≤2(x+4y) disposed on a surface of the silicon nanoparticle and a carbon (C) coating layer formed on the oxide film.

2. A method of manufacturing silicon nanoparticles comprising an oxide film of LiₓSi_{y}O_{z} where x>0, y>0, 0<z≤2(x+4y) disposed on a surface of the silicon nanoparticle and a carbon (C) layer formed on the oxide film, the method comprising:
injecting a lithium (Li) source and a carbon (C) source into silicon nanoparticles and mixing therewith, followed by heat-treating the mixture at a temperature in a range of 700 to 1,200 °C;
**characterized in that** the mixing is performed by wet grinding or dry grinding.

3. The method of claim 2, further comprising additionally injecting a carbon source into the silicon nanoparticles and mixing therewith, and heat-treating at a temperature in a range of 900 to 1,200 °C.

4. The method of claim 2, wherein a diameter of the silicon nanoparticles is in a range of 5 to 500 nm.

5. The method of claim 2, wherein a lithium source includes Li₂CO₃ or LiOH.

6. The method of claim 2, wherein the carbon source comprises at least one type selected from the group consisting of graphite, pitch, urea, and sucrose.

7. An anode for a lithium secondary cell, comprising silicon nanoparticles manufactured by the method of any one of claims 2 to 6.

8. A lithium secondary cell comprising silicon nanoparticles manufactured by the method of any one of claims 2 to 6 as a negative active material.

## Patentansprüche

1. Siliciumnanopartikel, umfassend eine Oxidschicht von LiₓSi_{y}O_{z}, wobei x>0, y>0, 0<z≤2(x+4y), die auf einer Oberfläche des Siliciumnanopartikels angeordnet ist, und eine auf der Oxidschicht gebildete Kohlenstoff(C)-Deckschicht.

2. Verfahren zur Herstellung von Siliciumnanopartikeln, umfassend eine Oxidschicht von LiₓSi_{y}O_{z} , wobei x>0, y>0, 0<z≤2(x+4y), die auf einer Oberfläche des Siliciumnanopartikels angeordnet ist, und eine auf der Oxidschicht gebildete Kohlenstoff(C)-Schicht, wobei das Verfahren Folgendes umfasst:
Injizieren einer Lithium(Li)-Quelle und einer Kohlenstoff(C)-Quelle in Siliciumnanopartikel und Mischen mit diesen, gefolgt von Wärmebehandeln der Mischung in einem Temperaturbereich von 700 bis 1.200 °C;
**dadurch gekennzeichnet, dass** das Mischen durch Nassmahlen oder Trockenmahlen durchgeführt wird.

3. Verfahren nach Anspruch 2, ferner umfassend das Injizieren einer Kohlenstoff-Quelle in die Siliciumnanopartikel und Mischen mit diesen, sowie Wärmebehandeln in einem Temperaturbereich von 900 bis 1.200 °C.

4. Verfahren nach Anspruch 2, wobei ein Durchmesser der Siliciumnanopartikel in einem Bereich von 5 bis 500 nm liegt.

5. Verfahren nach Anspruch 2, wobei eine Lithiumquelle Li₂CO₃ oder LiOH beinhaltet.

6. Verfahren nach Anspruch 2, wobei die Kohlenstoffquelle mindestens einen Typ aus der Gruppe bestehend aus Graphit, Pech, Harnstoff und Saccharose umfasst.

7. Anode für eine Lithium-Sekundärzelle, umfassend Siliciumnanopartikel, die gemäß dem Verfahren nach einem der Ansprüche 2 bis 6 hergestellt werden.

8. Lithium-Sekundärzelle, umfassend Siliciumnanopartikel, die gemäß dem Verfahren nach einem der Ansprüche 2 bis 6 als negatives aktives Material hergestellt werden.

## Revendications

1. Nanoparticule de silicone comprenant un film d'oxyde de LiₓSi_{y}O_{z} où x>0, y>0, 0<z≤2(x+4y) disposé sur une surface de la nanoparticule de silicone et une couche de revêtement de carbone (C) formée sur le film d'oxyde.

2. Procédé de fabrication de nanoparticules de silicone comprenant un film d'oxyde de LiₓSi_{y}O_{z} où x>0, y>0, 0<z≤2(x+4y) disposé sur une surface de la nanoparticule de silicone et une couche de carbone (C) formée sur le film d'oxyde, le procédé comprenant :
l'injection d'une source de lithium (Li) et d'une source de carbone (C) dans des nanoparticules de silicone et le mélange avec celles-ci, suivi par le traitement à chaud du mélange à une température dans une plage de 700 à 1 200° C ;
**caractérisé en ce que** le mélange est exécuté par broyage humide ou broyage à sec.

3. Procédé selon la revendication 2, comprenant en outre l'injection supplémentaire d'une source de carbone dans les nanoparticules de silicone et le mélange avec celles-ci, et le traitement à chaud à une température dans une plage de 900 à 1 200° C.

4. Procédé selon la revendication 2, dans lequel un diamètre des particules de silicone est dans une plage de 5 à 500 nm.

5. Procédé selon la revendication 2, dans lequel une source de lithium inclut du Li₂CO₃ ou LiOH.

6. Procédé selon la revendication 2, dans lequel la source de carbone comprend au moins un type sélectionné dans le groupe constitué de graphite, asphalte, urée, et sucrose.

7. Anode pour une pile secondaire au lithium, comprenant des nanoparticules de silicone fabriquées par le procédé selon l'une quelconque des revendications 2 à 6.

8. Pile secondaire au lithium, comprenant des nanoparticules de silicone fabriquées par le procédé selon l'une quelconque des revendications 2 à 6 en tant que matériau actif négatif
